(19) 

Europäisches
Patentamt
European
Patent Office
Office européen
des brevets

(11)  **EP 4 235 474 A1**

(12)  **EUROPEAN PATENT APPLICATION**

(43) Date of publication:
**30.08.2023 Bulletin 2023/35**

(21) Application number: **22382159.6**

(22) Date of filing: **24.02.2022**

(51) International Patent Classification (IPC):
**G06F 21/62** *(2013.01)*

(52) Cooperative Patent Classification (CPC):
**G06F 21/6254**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Fundación Tecnalia Research &
Innovation**
**48160 Derio - Bizkaia (ES)**

(72) Inventors:
  • **Larrucea Uriarte, Xabier**
    **Derio - Bizkaia (ES)**
  • **Seco Aguirre, Iñaki**
    **Derio - Bizkaia (ES)**
  • **Lage Serrano, Oscar**
    **Derio - Bizkaia (ES)**
  • **Regueiro Senderos, Cristina**
    **Derio - Bizkaia (ES)**

(74) Representative: **Balder IP Law, S.L.**
    **Paseo de la Castellana 93**
    **5ª planta**
    **28046 Madrid (ES)**

(54)  **METHOD AND SYSTEM FOR ANONYMISING EVENT LOGS**

(57)    The invention refers to a method and system for anonymizing event logs. It comprises extracting, from a plurality of previously registered event logs, an IP address of each event log. The IP address identifies the source that has generated the event log. It further comprises extracting, for each extracted IP address, segments of the IP address. For at least one the segments of the extracted IP address, the method calculates a sensitivity value for the segment and applies an amount of noise to the segment. The amount of noise depends on the calculated sensitivity value for the segment. In this way, the segment is masked with the noise. The masked segments of a particular IP address are merged to form a masked IP address. Then, the event logs associated to their corresponding masked IP addresses are stored in a database.

EP 4 235 474 A1

## Description

## TECHNICAL FIELD

The present invention relates to the field of data protection. In particular, it relates to methods and systems for protecting sensitive data against cyberattacks, for example, but not limiting, when gathering events by Security Information and Event Management (SIEM) tools.

## STATE OF THE ART

In the last years, the demand for data from surveys, registers, census or any other data collection has dramatically increased. However, this data usually contains sensitive information on people or companies. Therefore, before providing the demanded data, confidentiality of the sensible information must be guaranteed. Statistical Disclosure Control (SDC) methods have been proposed and widely used in privacy protecting contexts, for example when users want to mask Personally Identifiable Information (PII).

One of these techniques is K-Anonymity technique, disclosed by L. Sweeney in k-ANONYMITY: A MODEL FOR PROTECTING PRIVACY, International Journal of Uncertainty, Fuzziness and Knowledge-Based Systems, vol. 10, n.° 05, pp. 557-570, oct. 2002 (doi: 10.1142/S0218488502001648), which has been used in several contexts, such as in data mining (G. Navarro-Arribas, V. Torra, A. Erola, y J. Castellà-Roca, User k-anonymity for privacy preserving data mining of query logs, Information Processing & Management, vol. 48, n.° 3, pp. 476-487, may 2012 (doi: 10.1016/j.ipm.2011.01.004)) or for preserving model in databases (Yan Zhao, Jian Wang, Yongcheng Luo and Jiajin Le, (α, β, k)-anonymity: An effective privacy preserving model for databases, 2009 International Conference on Test and Measurement, Hong Kong, dic. 2009, pp. 412-415 (doi: 10.1109/ICTM.2009.5412903)).

K-Anonymity has been extensively studied as an anonymisation technique, and several variants of this algorithm have been proposed for mitigating existing flaws, such as the utility of the results. Broadly speaking, K-anonymity requires that at least k-1 equivalent elements are included in a dataset for a specific quasi-identifier. This prerequisite requires a previous analysis or pre-processing for assuring this property, which it cannot always be assured. This K-Anonymity technique removes some parts of the data, which may result in a loss of utility of the resulting dataset. In other words, when K-Anonymity technique is applied, there may be an uncontrollable information loss. An additional drawback of K-Anonymity and its improvements is that it is sensitive to recovery attacks, which compromises the private preserved data.

Differential Privacy (DP) is another technique for publicly sharing information about a dataset by describing the patterns of groups within the dataset while withholding information about individuals in the dataset. The idea behind differential privacy is that if the effect of making an arbitrary single substitution in the database is small enough, the query result cannot be used to infer much about any single individual, and therefore provides privacy. Another way to describe differential privacy is as a constraint on the algorithms used to publish aggregate information about a statistical database which limits the disclosure of private information of records whose information is in the database. The use of Differential Privacy for protecting personal identifiable information is for example disclosed by A. Alnemari, R. K. Raj, C. J. Romanowski and S. Mishra in Protecting Personally Identifiable Information (PII) in Critical Infrastructure Data Using Differential Privacy, 2019 IEEE International Symposium on Technologies for Homeland Security (HST), Woburn, MA, USA, nov. 2019, pp. 1-6 (doi: 10.1109/HST47167.2019.9032942).

SIEM tools are security tools which purpose is to capture and receive events generated in a specific computer network composed by a set of hosts. SIEM tools can be used to automate various aspects of vulnerability management processes. In fact, SIEM tools provide real-time event management and historical analysis of security data from a wide set of heterogeneous sources. SIEM tools enable filtering data and extracting relevant information from a specific network. There are many open source and commercial tools performing this kind of operations. One relevant open-source tool is the OSSIM™ (Open-Source Security Information and event Management), which provides a feature-rich open source SIEM tool with event collection, normalization and correlation. This kind of tools gathers networks events, which are represented as event logs. Event logs often contain valuable data about the operation of management systems. For example, event logs are characterised by a set of attributes including infrastructure-related information, such as information about the network topology (for example network addresses, such as Internet Protocol (IP) addresses) or server names. Event logs may also include other sensitive information, such as personally identifiable information.

Information about the network topology, such as IP addresses, may enable a potential attacker to map a network and search for vulnerabilities. In other words, IP addresses are normally used during a potential cyberattack by the attacker. In fact, potential attackers try to gather information on a target in a process known as reconnaissance, of which there are several techniques. All of them consider IP addresses as fundamental attributes because they reveal a network topology. Therefore, if left unprotected, an event log can be the source of information used in a targeted thread.

US10326772B2 discloses several methods for anonymizing a data field in a log entry, such as by encrypting the data field using a one-way hash, by encrypting the data field using reversible encryption, by replacing the data field with random data, by generalizing the data field, by replacing the data field with static data and by removing the data field.

However, all the previously described methods are weak against database recovery attacks or the anonymized data resulting of such methods presents reduced usability, among other drawbacks. In particular, DP only serves for making simple queries since, for complex queries, noise might affect the obtained result, the sensitivity factor calculated in DP is just a mathematical approximation and the results obtained in DP are inaccurate (stochastic process) and does not allow to check whether said results are correct (this is especially relevant when applied in machine learning).

Therefore, there is a need in the art to develop improved methods and systems for anonymizing event logs, which overcome the limitations of conventional tools therefor.

## DESCRIPTION OF THE INVENTION

The method and system for anonymizing event logs described in the present invention intend to solve the shortcomings of prior-art methods and systems therefor.

As used herein, the term "event log" may refer to files that contain any kind of information about usage and operations of operating systems, applications or devices. For example, said event logs may contain information about logon sessions to a network, account lockouts, failed password attempts, etc. It can also record different types of application events, such as application errors, closures or other related events.

As used herein, the term "computer network" may refer to a set of interconnected computing units sharing resources located on or provided by network nodes. These computing units may be personal computers, servers, networking hardware or other specialized or general-purpose hosts. These computing units generally use common communication protocols over digital interconnections to communicate with each other and are identified by network addresses, more particularly, by IP addresses. Computer networks may be public or private.

Events generated in a computer network comprise IP addresses identifying the device (for example, a host computer) in which a particular event occurs. These events may be generated by the device itself or by operation systems, programs or applications being executed in such device. Therefore, event logs according to the present invention comprise at least information about the topology of the computer network they come from. In particular, event logs comprise network addresses, such as IP addresses. These IP addresses may be any version of an Internet Protocol address that is configured to identify and locate hosts on networks and route data traffic across the Internet. For example, the IP addresses may be IPv4, IPv4+, IPv6 or IPv6+, among other well-known IP address versions. The proposed method and system are able to mask these IP addresses, so that the device (or in general, the part of the network and its topography) in which the event has occurred, is kept private. Since other data such as the Operative System (OS) of the host can be derived from its IP address, this information is also kept private by means of the method and system herein disclosed.

The proposed method anonymizes IP addresses using differential privacy-based techniques, which provides enhanced privacy and makes it easier for a trusted third party to send simple or complex queries to the anonymized data to exploit it in a safe and reliable manner.

A first aspect of the invention refers to a computer-implemented method for anonymizing event logs. The method comprises extracting, from a plurality of event logs previously registered, the IP address of each registered event log. These event logs may had been gathered from a particular computing device or computer network, specifically, a public or private network, and stored in a database that may be part of the device or the computer network or may be an external device. The IP address identifies a source device, e.g., a computing device such as a laptop, computer, server, router, IoT device, raspberry, firewall, IP telephone, printer, virtual machine, or any other device connected to the Internet and operating on the IP layer, that has generated the event log. Then, the method extracts, for each one of the extracted IP addresses, the segments of the corresponding IP address. As used herein, the term "segment" may refer to the groups of bits separated by periods/colons in an IP address expressed in decimal numbers. For IPv4 or IPv4+, the segments will correspond with four octects (8 bits) separated by periods (dots) while for IPv6 or IPv6+ the segments will correspond with eight groups of 16 bits separated by colons. Therefore, depending on the number of bytes of the IP address, the number of segments extracted may vary. For at least one of the segments of the extracted IP address, the method calculates a sensitivity value for that particular segment, applies an amount of noise to the particular segment such that the segment is masked with that noise and merges the segments previously extracted from the IP address, those masked and also those unmasked, to form a masked IP address. The amount of noise that the method applies to each segment depends on the calculated sensitivity value for that particular segment. After that, the event logs associated to their corresponding masked IP addresses are stored in a database. Preferably, the method may mask (by calculating the sensitivity value and applying the corresponding noise) all segments of the IP address, although, alternatively, the method may mask only some segments of the IP address, in particular those segments whose privacy is more important. While by masking all segments of the IP address privacy is enhanced, by masking only some segments of the IP address the computational load of implementing the method is lowered.

Preferably, the resulting masked IP addresses will correspond to the previously extracted IP addresses but with a different amount of noise applied to each segment of said IP addresses. By masking each segment with a different amount of noise, the anonymization applied to the IP addresses does not depend on the network mask.

Thus, anonymizing event logs with the method herein disclosed increases the privacy of the event logs to protect them against cyber-attacks, in particular, database recovery cyberattacks or linking cyberattacks. This differential privacy-based method has also a low computational cost, ensures that no data is lost during the anonymizing process and contributes to comply with, e.g., General Data Protection Regulation (GDPR) and California Consumer Privacy Act (CCPA) regulation, among other data protection regulations.

The event logs may be registered every time an event occurring in any of the hosts of the computer network is notified to an Open-Source Security Information Management (OSSIM) module. The OSSIM module might receive the event logs through network devices via syslog protocols, Kafka protocols, Spark protocols, RabbitMQ protocols, or other well-known communication protocols.

In some embodiments, the event logs, in their entirety, and the extracted IP addresses of the event logs are stored in a private database. This private database has a very restricted access. In particular, it is only accessible by users having a corresponding access code. These private databases may be centralized databases, cloud databases, commercial databases, distributed databases, end-user databases, NoSQL databases, object-oriented databases, among many other types of databases.

In some embodiments, the event logs having their corresponding masked IP addresses are stored in a public database. Although public databases are accessible to any one, since the IP addresses therein stored have been masked by the method object of the invention keeping them private, the event logs therein stored are protected against cyber-attacks.

In some embodiments, the method comprises gathering the plurality of event logs from a computing device or a computer network and storing them in a database by a network management system, in particular, a Security Information and Event Management (SIEM) tools. As used herein, the term "network management system" may refer to management systems comprising collecting modules configured to gather/collect event logs from computing devices or computer networks.

In some embodiments, the sensitivity value calculated for and associated to a particular segment depends on the importance of the segment in terms of data privacy. In some examples, the importance of the segment in terms of data privacy may be determined by its ordinal position within the IP address. For example, in some versions of IPv4 the first or the first and second segments refer to the computer network while the second to fourth or the third and fourth segments refer to the host, so higher sensitivity values are assigned to the segments referring to the host (which are more important in terms of privacy). Preferably, the sensitivity value calculated for and associated to a segment is higher the lower is the ordinal position of the segment within the IP address. That is to say, for an IP address with dotted decimal format, e.g., IPv4 'aaa.bbb.ccc.ddd', the first octect corresponds to byte 'aaa', the second octect corresponds to byte 'bbb', the third octect corresponds to byte 'ccc' and the fourth octect corresponds to byte 'ddd', and the sensitivity value is higher for the fourth octect than for the third octect and so forth. Since, independently of the IP address class, the first octects identify the network while the last octects identify the host, it will be advantageous to increase the amount of noise applied to mask the last octects to ensure that the most sensitive information which relates to host identification is better masked. More preferably, the sensitivity value calculated for and associated to a segment may alternatively or simultaneously depend on the type of computer network on which the anonymizing method is applied. For example, in some implementations the first segment of an IP address may be critical in terms of data privacy because said first segment gives information about the country in which the computer network that is generating the event logs is deployed and said information is very sensitive information. In such embodiments, the sensitivity value and thus, the amount of noise applied to the first segment will be higher than to the rest of the segments of the IP address. Thus, depending on the particularities of the computer network from which the event logs have been registered, the amount of noise applied to each segment of the IP address may vary.

In some embodiments, the sensitivity value is calculated as

$$y = 2^x \; ;$$

or

$$y = 4 * \mathrm{x} \; ;$$

or

$$y = 16 * (1 - 2^{-x}) \; ;$$

wherein $x$ the ordinal position of the segment within the IP address and y the resulting sensitivity of the segment. While $y=2^x$ is a particular example for obtaining the sensitivity value with an exponential growth function, $y=4*x$ is a particular example for obtaining the sensitivity value with a lineal growth function and $y=16*(1-2^{-x})$ is a particular example for obtaining the sensitivity value with an attenuated growth function that establishes a maximum noise level of 16, many other functions that fall within the common general knowledge of the skilled person could be implemented for obtaining said sensitivity value. Preferably, said function determines a different sensitivity value for each segment of the same IP address. Preferably, the same function is used for calculating the sensitivity of the segments of the same IP address although in some examples, different functions could be used for different segments of the same IP address.

In some embodiments, the method comprises generating the noise to be applied to each segment by using a technique selected from a group comprising: Laplace technique, Exponential technique, Gaussian technique and any combination thereof. Other techniques that may be used for generating the noise may be Count above, Percentile, Bounded Sum, Bounded Mean, Variance, Min, Max, Standard deviation, Quantiles, Automatic bounds approximation, Truncated geometric thresholding, Laplace thresholding, Gaussian thresholding, or any combination thereof. Other randomization techniques could be also used to calculate the noise applied to the segments. Preferably, the method uses the Gaussian and Laplace techniques because they present a lower error rate since they can implement "secure noise generation" from Google®. Preferably, the same technique may be used for calculating the noise to be applied to all the segments of the same IP address although in some examples, different techniques could be used for calculating the noise to be applied to different segments of the same IP address.

In some embodiments, the method assigns the same masked IP address to identical IP addresses corresponding to registered event logs generated by the same source. To do so, the method compares the IP address to be processed with IP addresses already processed, and when it detects a coincidence, then directly assigns the same masked IP address to the repeated IP address. By assigning the same masked IP address to those event logs generated by the same host, the results of the aggregated data are not altered.

A second object of the invention is a system for anonymizing event logs. The system comprises a receiving module configured to receive a plurality of registered event logs, that may come from a computing device or a computer network, and an anonymizer module configured to, for each one of the received event logs:

extract an IP address of the event log, the IP address identifying a source that has generated the event log; extract, for each extracted IP address, segments of the IP address, and for at least one segment of the extracted IP address,

calculate a sensitivity value for the segment, and apply an amount of noise to the segment, said amount of noise depending on the calculated sensitivity value for that segment, such that the segment is masked;

merge the segments of the IP address to form a masked IP address; and store the event log associated to its corresponding masked IP address in a database.

Preferably, the system may mask (by calculating the sensitivity value and applying the corresponding noise) all segments of the IP address, although, alternatively, the system may mask only some segments of the IP address, in particular those segments whose privacy is more important.

In some embodiments, the system comprises a private database configured to store the event logs and their corresponding extracted IP addresses.

In some embodiments, the system further comprises a public database configured to store the event logs with their masked IP addresses.

In some embodiments, the system comprises a network management module having a collecting unit that is configured to collect/gather the plurality of event logs from the computing unit or computer network and to store them into a database. The network management module is preferably a Security Information and Event Management (SIEM) module. This network management module can be connected to the receiving module of the system so the registered event logs can be sent from the network management module to the receiving module of the system for anonymizing event logs.

In some embodiments, the anonymizer module comprises: an IP address extraction module configured to extract the IP address of each event log; a segment extraction module configured to extract the segments of the IP addresses; a sensitivity calculation module configured to calculate the sensitivity value for the segments; a noise generation module configured to calculate the amount of noise to be applied to each segment; a noise application module configured to apply the corresponding amount of noise to each segment; and a segment merging module configured to merge the masked (and unmasked if not all the segments have been masked) segments of each IP address to form the respective masked IP address.

A third object of the invention is a non-transitory computer-readable medium comprising one or more computer-readable instructions that, when executed by at least one processor of a computing device, cause the computing device to:

extract, from a plurality of registered event logs, an IP address of each event log, the IP address identifying a source that has generated the event log; extract, for each extracted IP address, segments of the IP address; and for at least one segment of the extracted IP address,

calculate a sensitivity value for the segment,

apply an amount of noise to the segment, said amount of noise being dependent on the calculated sensitivity value for that segment, such that the segment is masked with the noise,

merge the segments of the IP address to form a masked IP address; and
store the event logs associated to their corresponding masked IP addresses in a database.

## BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

Figure 1 shows a flow diagram of the method for anonymizing event logs, according to an embodiment of the present invention.
Figure 2 shows a flow diagram of the method for anonymizing event logs, according to another embodiment of the present invention.
Figure 3 shows a block diagram of a system for anonymizing event logs, according to an embodiment of the present invention.
Figure 4 shows a block diagram of a system for anonymizing event logs including an OSSIM collecting event logs from a computer network and storing them into a private database, according to an embodiment of the invention.
Figure 5 shows an example IPv4 address with its different octects. The number represent on each octect is between 0 and 255.
Figure 6 shows the example IPv4 address of figure 5 indicating the order of the octects on which the masking is applied, according to an embodiment of the invention.
Figure 7 shows a table including a plurality of IP addresses before and after being masked with the method and system according to a particular embodiment of the present invention.
Figure 8 shows a block diagram of an anonymizer module, according to a particular embodiment of the invention.

## DESCRIPTION OF A WAY OF CARRYING OUT THE INVENTION

The following description is generally related to systems and methods for anonymizing event logs (network event logs).

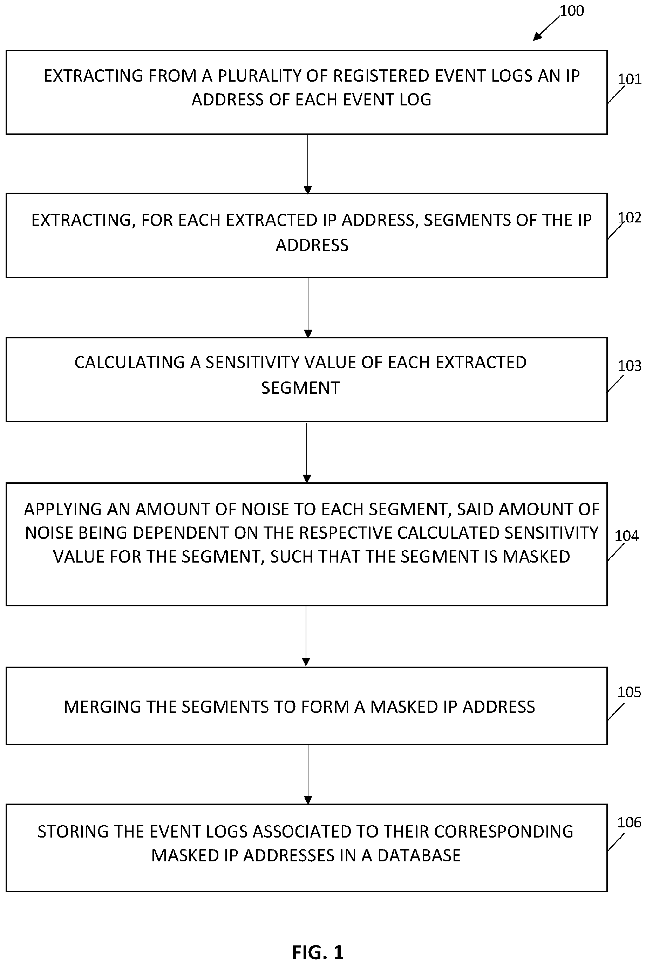

Figure 1 shows a flow diagram of the method 100 for anonymizing event logs according to an embodiment of the present invention.
The method 100 comprises the steps of extracting 101, from a plurality of event logs previously registered in a particular computer network, the IP address of each registered event log. The IP address identifies a source, e.g., a computing device such as a laptop, computer, server, etc., that has generated the event log. Then, the method extracts 102, for each one of the extracted IP addresses, the segments of the corresponding IP address. These segments are the numeric segments separated by periods/colons that form an IP address written in decimal digits. Depending on the number of bytes of the IP address, the number of segments extracted may vary. For example, for an IPv4 address the method will extract four 8-bit segments, i.e., four octects (0-255), while for an IPv6 address the method will extract eight 16-bit segments (0-65535). For each segment of the extracted IP address, the method calculates 103 a sensitivity value for the particular segment, applies 104 an amount of noise to the particular segment such that the segment is masked with that noise and merges 105 the masked segments previously extracted from the IP address to form a masked IP address. The amount of noise that the method applies to each segment depends on the calculated sensitivity value for that particular segment. After that, the event logs associated to their corresponding masked IP addresses are stored 106 in a database. In this data base, the original IP addresses of the event logs are not available for a third party sending a query but their masked IP addresses so said original IP addresses are kept private.
The resulting masked IP addresses will correspond to the previously extracted IP addresses but with a different amount of noise applied to each segment of said IP addresses. In this way, the privacy of the event logs is increased against cyber-attacks, in particular, database recovery cyberattacks. This differential privacy-based method has also a low computational cost and ensures that no data is lost during the anonymizing process.

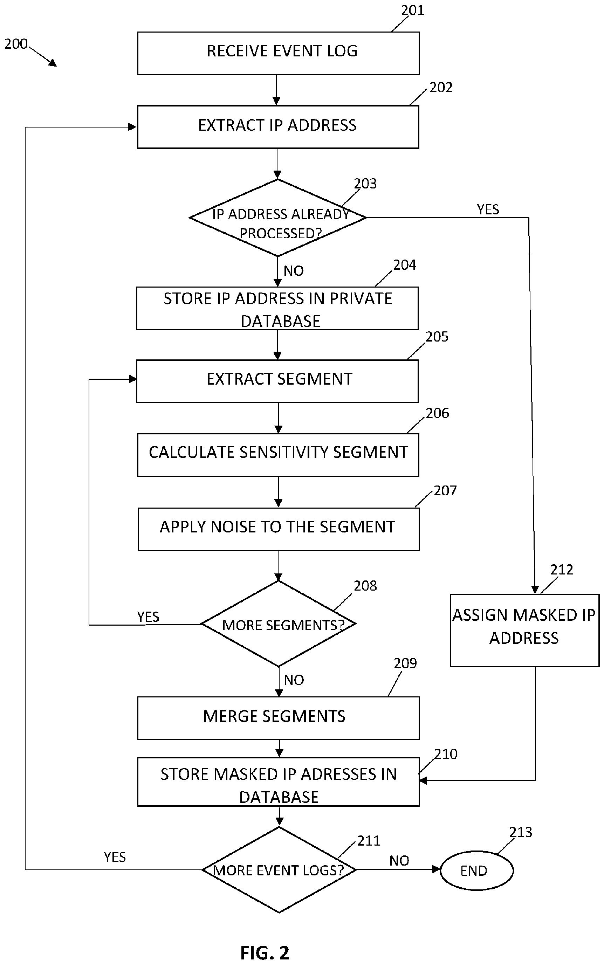

Figure 2 shows a flow diagram of the method 200 for anonymizing event logs, according to another embodiment of the present invention.
The method 200 comprises the steps of receiving 201 an event log registered in a computer network. This event log may capture logon sessions to the network, along with account lockouts, failed password attempts, etc. Then, the method 200 extracts 202 its IP address, e.g., an IPv4 address. The method checks 203 whether the extracted IP address has been previously processed, i.e., masked. To do so, the method compares the extracted IP address with a list of IP addresses already processed, and if there is a match (then, there is more than one event log generated by the same host in the computer network), then directly assigns 212 the same masked IP address to the extracted (repeated) IP address so the results of the aggregated data are not altered, and stores 210 said masked IP address together with its associated event log in a database, preferably a public database. If the extracted IP address has not been previously processed, it is stored 204 together with the event log in a private database. Then, a first segment (the segments are four octects in this case) of the event log is extracted 205 and a sensitivity value for the first segment of the IP address is calculated 206. The sensitivity value calculated for the segment may depend on the importance of that particular segment in terms of privacy for a particular application, so higher sensitivity values are calculated for those segments whose privacy is more important. Since the ordinal position of the segments within an IP address is generally related to its importance in terms of privacy this sensitivity factor may depend on the ordinal position of the segment within the IP address. For example, first segments of the IP address may relate to the computer network while last segments may relate to the host, and information relating to the host is generally more sensitive. In alternative embodiments, the first segments may relate to the host and the last segments may relate to the computer network.

The type of computing device or computer network from which the event log has been registered may also determine the sensitivity value calculated for each segment of an IP address. In other words, specific computer networks or hosts may require a higher degree of masking for some particular segments of the IP address for several security reasons. After that, the method 200 applies 207 an amount of noise to the segment, this amount of noise depending on the calculated sensitivity value for that particular segment. This amount of noise may be generated by different techniques although preferably it may be generated by Gaussian or Laplace techniques. By applying the calculated amount of noise to the segment, it is masked. Then, it is checked 208 whether there are more segments in the same IP address not still masked. If there are more segments, steps 205-207 of the method 200 are executed for the rest of segments until there are no more segments of the IP address to be masked. So, when all the segments of an IP address have been masked, they are merged 209 forming a masked IP address. After that, the event log associated to its masked IP address is stored 210 in the database, preferably the public database. Then, it is checked 211 whether there are more event logs to be anonymized. If there are no more events logs to be anonymized, the method 200 ends 213. If there are more event logs to be anonymized, steps 202-209 of the method 200 are executed for the next event log.

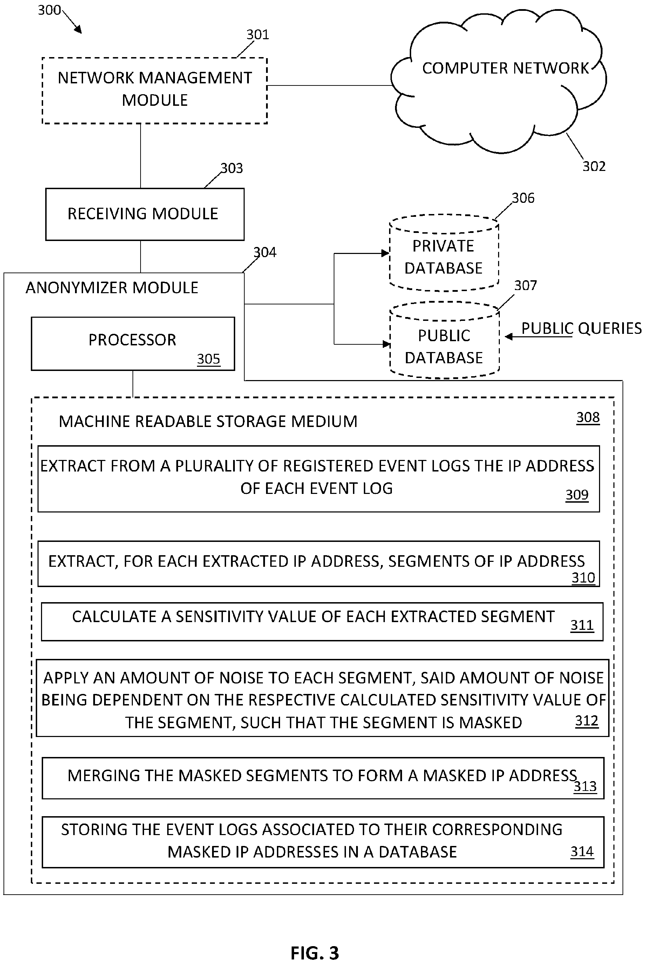

Figure 3 shows a block diagram of a system 300 for anonymizing event logs, according to an embodiment of the present invention. It should be understood that the example system 300 shown in Fig. 3 may include additional components and that some of the components described herein may be removed and/or modified without departing from the scope of the system 300.

The system 300 comprises a receiving module 303 configured to receive a plurality of event logs, that may come from a computing device or a computer network 302, and an anonymizer module 304 that comprises a processor 305 and a machine-readable storage medium 308 comprising computer-readable instructions that, when executed by the processor, cause, for each one of the received event logs, the processor to:

> extract 309 an IP address of the event log, the IP address identifying a source that has generated the event log;
> extract 310, for each extracted IP address, segments of the IP address, and for each segment of the extracted IP address,
> calculate 311 a sensitivity value for the segment, and apply 312 an amount of noise to the segment, said amount of noise depending on the calculated sensitivity value for that segment, such that the segment is masked;
> merge 313 the masked segments of the IP address to form a masked IP address; and
> store 314 the event log associated to its corresponding masked IP address in a database.

The system may comprise a private database 306 configured to store the event logs and their corresponding extracted IP addresses and a public database 307 configured to store the event logs with their masked IP addresses. The system may further comprise a network management module 301 configured to collect/gather the plurality of event logs from the computing unit or computer network so they are further stored into the private database. Since in the public database 307 the original IP addresses of the event logs are not available but their masked IP addresses, public queries can be sent by third parties to said public database 307 while keeping the original IP addresses private. The rest of the information related to the event logs is accessible to the third party but he will not know what host has generated the respective event log.

As used herein, a "machine-readable storage medium" may be any electronic, magnetic, optical, or other physical storage apparatus to contain or store information such as executable instructions, data, and the like. For example, any machine-readable storage medium described herein may be any of Random-Access Memory (RAM), volatile memory, non-volatile memory, flash memory, a storage drive (e.g., a hard drive), a solid-state drive, any type of storage disc (e.g., a compact disc, a DVD, etc.), and the like, or a combination thereof. Further, any machine-readable storage medium described herein may be non-transitory.

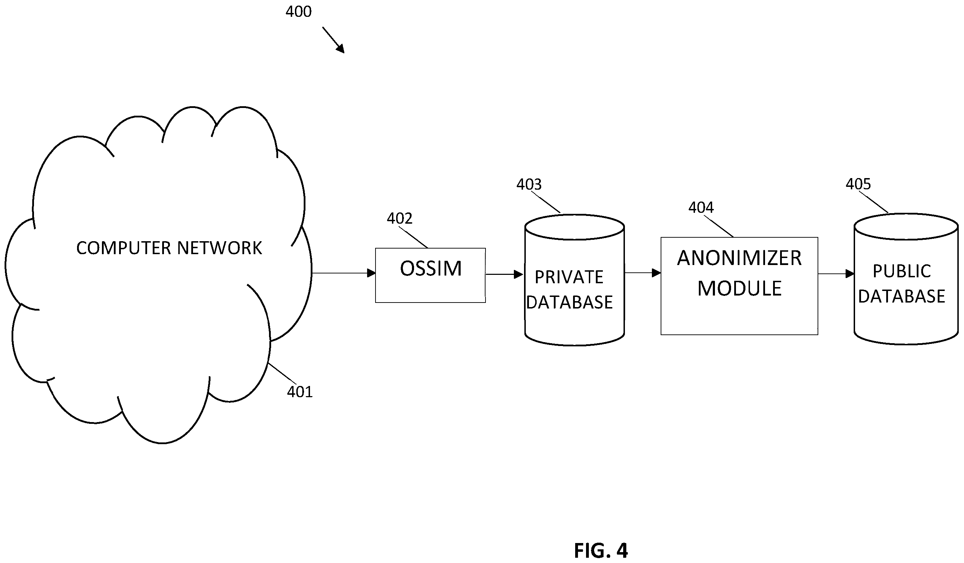

Figure 4 shows a block diagram of a system 400 for anonymizing event logs including an OSSIM 402 collecting event logs from a computer network 401 and storing them into a private database 403, according to an embodiment of the invention. It should be understood that the example system 400 shown in Fig. 4 may include additional components and that some of the components described herein may be removed and/or modified without departing from a scope of the system 400.

The event logs once collected and stored in the private database 403 can be sent to the anonymizer module 404 that applies the method for anonymizing event logs described in figures 1 or 2 and the obtained masked IP addresses together with their associated event logs are stored in a public database 405. Then, simple or complex queries can be sent to the public database 405 to obtain information from the event logs at the same time that it is ensured that information related to the IP addresses associated to the event logs is kept private.

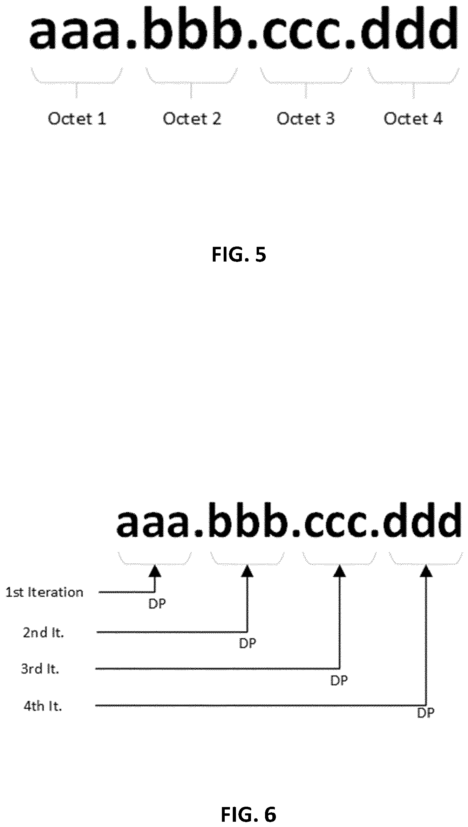

Figure 5 shows an example of an IPv4 address with its different octects, wherein each octect is separated by a dot. The number represent on each octect is between 0 and 255. Thus, for this representation of the IP address, it has been considered a, b, c, d $\in \mathbb{N}$ , and aaa, bbb, ccc, ddd $\in \{0, 255\}$.

In this example, the first octect corresponds to byte 'aaa', the second octect corresponds to byte 'bbb', the third octect corresponds to byte 'ccc' and the fourth octect corresponds to byte 'ddd'.

While figure 5 shows an IPv4, the method and system of the present disclosure may be applied to other types of IP addresses with decimal formats such as IPv4+, IPv6 or IPv6+. Besides, while in figure 6 the octets have been numbered from left to right, in some other embodiments, said octects can be numbered in the opposite order.

Figure 6 shows the example IPv4 address of figure 5 indicating the order of the octects on which the masking is applied, according to an embodiment of the invention.

Preferably, once the octects have been extracted from the IP address, the octects are also processed (masked) form left to right. therefore, in a first iteration octect one 'aaa' is masked, then in a second iteration octect two 'bbb' is masked, and so forth. These octects could be also processed in the opposite order or even in a random order provided the system and method knows the position of the octect being processed within the IP address or whether the processed octect identifies the network or the host.

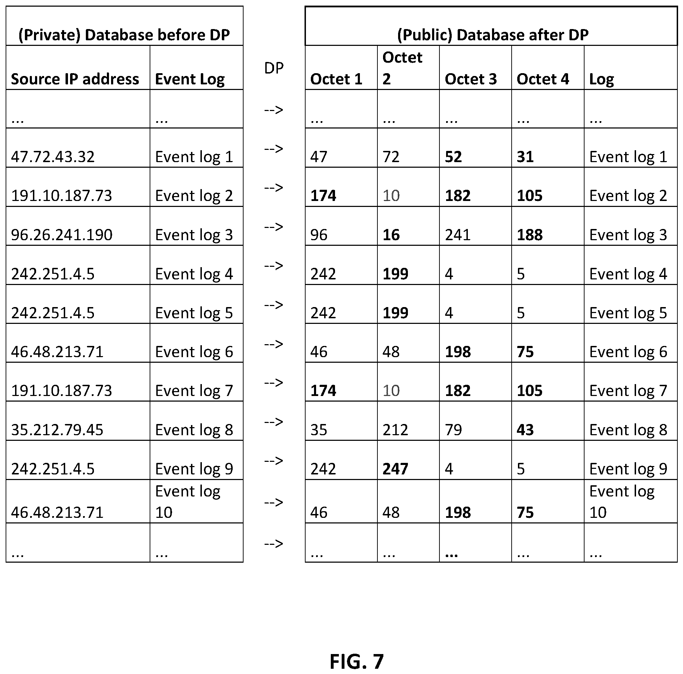

Figure 7 shows a table including a plurality of IP addresses before and after being masked with the method and system according to a particular embodiment of the present invention.

Specifically, the left-hand table includes ten event logs generated by ten source devices (hosts) with their respective ten IP addresses (IPv4). These event logs may come from the same computing network or from different computing networks and may be preferably stored in a private database. Then, the method for anonymizing event logs, for examples the method disclosed in figures 1 or 2, is applied to these ten IP addresses. The right-hand table includes the ten event logs with their IP addresses already masked. The masked IP addresses are different form the original IP addresses.

Although the calculated sensitivity value may be different for each segment, the Gaussian, Laplace or exponential algorithms (or any other randomization algorithm) used to calculate the noise to be applied to said segments may apply an amount of noise to a particular segment (octect in this case) that does not change the original segment. That is to say, the random noise generated by the mentioned techniques and applied to the segment may be such that it does not modify the obtained masked segment. For example, although noise has been applied to all the segments of the IP address of event log 1, masked octets 1 and 2 are equal to original octects 1 and 2 while octects 3 and 4 are different. In any case, when the parties sending queries to the public database see the masked IP addresses, they do not know whether one or more of the segments the masked IP addresses correspond to the original segments of the original IP addresses, so privacy is guaranteed.

Event logs 6 and 10 have been generated by the same source device since they have the same associated IP address. In this case, the method detects when processing event log 10 that the associated IP address has been previously masked (DP has been already applied) for event log 6 and assigns the same IP address to event log 10 than to event log 6, so the results of the aggregated data are not altered.

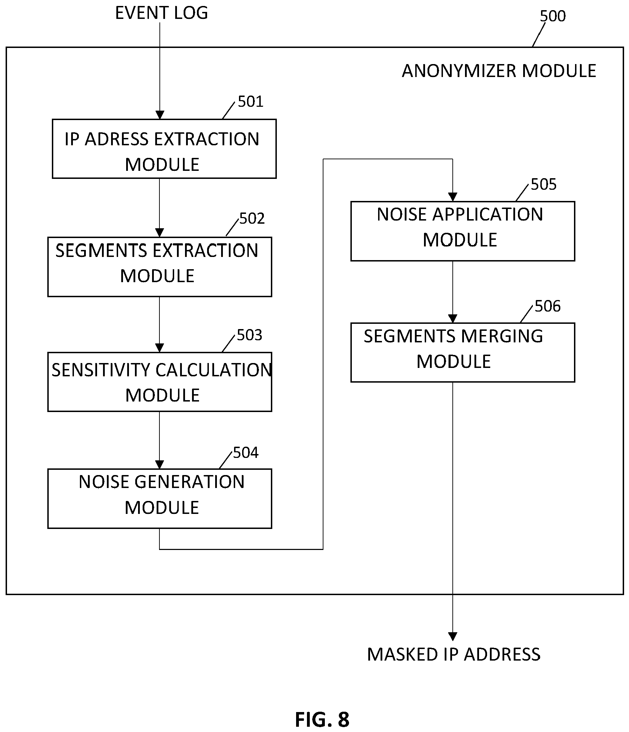

Figure 8 shows a block diagram of an anonymizer module 500, according to a particular embodiment of the invention. It should be understood that the anonymizer module 500 shown in Fig. 8 may include additional components and that some of the components described herein may be removed and/or modified without departing from a scope of the anonymizer module 500.

The anonymizer module 500 comprises: an IP address extraction module 501 configured to extract the IP address of each received event log; a segment extraction module 502 configured to extract the segments of the extracted IP addresses; a sensitivity calculation module 503 configured to calculate the sensitivity value for the segments; a noise generation module 504 configured to calculate the amount of noise to be applied to each segment; a noise application module 505 configured to apply the corresponding amount of noise to each segment; and a segment merging module 506 configured to merge the masked segments of each IP address to form the respective masked IP address.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

**Claims**

1. A computer-implemented method (100) for anonymizing event logs, comprising:

   extracting (101), from a plurality of registered event logs, an IP address of each event log, the IP address identifying a source that has generated the event log;
   extracting (102), for each extracted IP address, segments of the IP address; and
   for at least one segment of the extracted IP address,

   calculating (103) a sensitivity value for the segment,
   applying (104) an amount of noise to the segment, said amount of noise being dependent on the calculated sensitivity value for the segment, such that the segment is masked with the noise,

   merging (105) the segments of the extracted IP address to form a corresponding masked IP address; and
   storing (106) the event logs associated to their corresponding masked IP addresses in a database.

2. The method according to claim 1, wherein the event logs and the extracted IP addresses of the event logs are stored in a private database.

3. The method according to claim 1 or 2, wherein the event logs having the masked IP addresses are stored in a public database.

4. The method according to any one of the preceding claims, comprising gathering the plurality of event logs from a computing device or a computer network and registering the plurality of event logs in a database by a network management module, preferably a Security Information and Event Management (SIEM) tool.

5. The method according to any one of the preceding claims, wherein the sensitivity value calculated for and associated to a segment depends on the importance of the segment in terms of data privacy.

6. The method according to claim 5, wherein the sensitivity value calculated for and associated to a segment depends on its ordinal position within the IP address and more preferably, the sensitivity value calculated for and associated to a segment is higher the lower is the ordinal position of the segment within the IP address.

7. The method according to claim 5 or 6, wherein the sensitivity value is calculated as

$$y = 2^x \; ;$$

or

$$y = 4 * \mathbf{x} \, ;$$

or

$$y = 16 * (1 - 2^{-x}) \, ;$$

or any combination thereof, wherein $x$ is a number corresponding to an ordinal position of the segment within the IP address and $y$ the resulting sensitivity value of the segment.

8. The method according to any one of the preceding claims, comprising generating the noise to be applied to each segment by using a technique selected from a group comprising: Laplace technique, Exponential technique, Gaussian technique and any combination thereof.

9. The method according to any one of the preceding claims, comprising assigning the same masked IP address to identical IP addresses corresponding to registered event logs generated by the same source.

10. A system (300) for anonymizing event logs, comprising

   a receiving module (303) configured to receive a plurality of registered event logs;
   an anonymizer module (304) that is configured to, for each one of the received event logs:

   extract (309) an IP address of the event log, the IP address identifying a source that has generated the event log;
   extract (310), for each extracted IP address, segments of the IP address, and
   for each segment of the extracted IP address,

   calculate (311) a sensitivity value for the segment, and
   apply (312) an amount of noise to the segment, said amount of noise depending on the calculated sensitivity value for the segment, such that the segment is masked with the noise;

   merge (313) the masked segments of the extracted IP address to form a masked IP address; and

store (314) the event log associated to its corresponding masked IP address in a database.

11. The system according to claim 10, comprising a private database (306) configured to store the event logs and their extracted IP addresses.

12. The system according to claim 10 or 11, comprising a public database (307) configured to store the event logs with their masked IP addresses.

13. The system according to any one of claims 10 to 12, comprising a network management module (301), preferably a Security Information and Event Management (SIEM) module, configured to gather the plurality of event logs from a computing device or a computer network and to register the plurality of event logs in a database.

14. The system according to any one of claims 10-13, wherein the anonymizer module (500) comprises:

an IP address extraction module (501) configured to extract the IP address of each registered event log;
a segment extraction module (502) configured to extract the segments of the IP addresses;
a sensitivity calculation module (503) configured to calculate the sensitivity value for the segments;
a noise generation module (504) configured to calculate the amount of noise to be applied to each segment;
a noise application module (505) configured to apply the corresponding amount of noise to each segment; and
a segment merging module (506) configured to merge the masked segments of each extracted IP address to form the respective masked IP address.

15. A non-transitory computer-readable medium (308) comprising one or more computer-readable instructions that, when executed by at least one processor (305) of a computing device, cause the computing device to:

extract (309), from a plurality of registered event logs, an IP address of each event log, the IP address identifying a source that has generated the event log;
extract (310), for each extracted IP address, segments of the IP address; and
for each segment of the extracted IP address,

calculate (311) a sensitivity value for the segment,
apply (312) an amount of noise to the segment, said amount of noise being dependent on the calculated sensitivity value for the segment, such that the segment is masked,
merge (313) the masked segments of the IP address to form a masked IP address; and

store (314) the event logs associated to their corresponding masked IP addresses in a database.

FIG. 1

```
                                      201
         200         ┌──────────────────────┐
            ╲        │   RECEIVE EVENT LOG  │
             ↘       └──────────────────────┘
                                │
                                ▼               202
        ┌──────────────────────────────┐
    ──→ │      EXTRACT IP ADDRESS       │
    │   └──────────────────────────────┘
    │                   │
    │                   ▼          203
    │              ╱─────────╲              YES
    │            ╱  IP ADDRESS ╲────────────────────┐
    │           ╱   ALREADY      ╲                  │
    │           ╲  PROCESSED?    ╱                   │
    │            ╲              ╱                    │
    │              ╲──────────╱                      │
    │                   │ NO                          │
    │                   ▼            204              │
    │   ┌──────────────────────────────┐             │
    │   │  STORE IP ADDRESS IN PRIVATE │             │
    │   │          DATABASE            │             │
    │   └──────────────────────────────┘             │
    │                   │                            │
    │                   ▼            205              │
    │   ┌──────────────────────────────┐             │
    │ ─→│      EXTRACT SEGMENT          │             │
    │ │ └──────────────────────────────┘             │
    │ │                 │                            │
    │ │                 ▼            206             │
    │ │ ┌──────────────────────────────┐            │
    │ │ │  CALCULATE SENSITIVITY SEGMENT│            │
    │ │ └──────────────────────────────┘            │
    │ │                 │                           │
    │ │                 ▼            207            │
    │ │ ┌──────────────────────────────┐           │
    │ │ │   APPLY NOISE TO THE SEGMENT  │           │
    │ │ └──────────────────────────────┘           │
    │ │                 │                          │
    │ │                 ▼         208              │ 212
    │ │            ╱─────────╲                 ┌──────────────┐
    │ └──────YES──╱  MORE      ╲               │ ASSIGN MASKED IP│
    │            ╲  SEGMENTS?  ╱               │    ADDRESS    │
    │             ╲──────────╱                └──────────────┘
    │                 │ NO                           │
    │                 ▼          209                 │
    │   ┌──────────────────────────────┐             │
    │   │        MERGE SEGMENTS         │             │
    │   └──────────────────────────────┘             │
    │                 │              210              │
    │   ┌──────────────────────────────┐             │
    │   │  STORE MASKED IP ADRESSES IN  │◄────────────┘
    │   │           DATABASE            │
    │   └──────────────────────────────┘
    │                 │
    │                 ▼          211
    │            ╱─────────╲             NO        213
    └────YES────╱  MORE       ╲──────────────→  ( END )
               ╲ EVENT LOGS? ╱
                ╲──────────╱
```

**FIG. 2**

300

301

**NETWORK MANAGEMENT MODULE**

COMPUTER NETWORK

302

303

**RECEIVING MODULE**

304

306

PRIVATE DATABASE

307

**ANONYMIZER MODULE**

**PROCESSOR**
305

PUBLIC DATABASE

PUBLIC QUERIES

**MACHINE READABLE STORAGE MEDIUM** 308

EXTRACT FROM A PLURALITY OF REGISTERED EVENT LOGS THE IP ADDRESS OF EACH EVENT LOG 309

EXTRACT, FOR EACH EXTRACTED IP ADDRESS, SEGMENTS OF IP ADDRESS 310

CALCULATE A SENSITIVITY VALUE OF EACH EXTRACTED SEGMENT 311

APPLY AN AMOUNT OF NOISE TO EACH SEGMENT, SAID AMOUNT OF NOISE BEING DEPENDENT ON THE RESPECTIVE CALCULATED SENSITIVITY VALUE OF THE SEGMENT, SUCH THAT THE SEGMENT IS MASKED 312

MERGING THE MASKED SEGMENTS TO FORM A MASKED IP ADDRESS 313

STORING THE EVENT LOGS ASSOCIATED TO THEIR CORRESPONDING MASKED IP ADDRESSES IN A DATABASE 314

**FIG. 3**

**FIG. 4**

aaa.bbb.ccc.ddd

Octet 1    Octet 2    Octet 3    Octet 4

**FIG. 5**

aaa.bbb.ccc.ddd

1st Iteration ———————▲
DP

2nd It. ———————————▲
DP

3rd It. ———————————————▲
DP

4th It. ———————————————————▲
DP

**FIG. 6**

| (Private) Database before DP | | DP | (Public) Database after DP | | | | |
| Source IP address | Event Log | | Octet 1 | Octet 2 | Octet 3 | Octet 4 | Log |
|---|---|---|---|---|---|---|---|
| ... | ... | --> | ... | ... | ... | ... | ... |
| 47.72.43.32 | Event log 1 | --> | 47 | 72 | **52** | **31** | Event log 1 |
| 191.10.187.73 | Event log 2 | --> | **174** | 10 | **182** | **105** | Event log 2 |
| 96.26.241.190 | Event log 3 | --> | 96 | **16** | 241 | **188** | Event log 3 |
| 242.251.4.5 | Event log 4 | --> | 242 | **199** | 4 | 5 | Event log 4 |
| 242.251.4.5 | Event log 5 | --> | 242 | **199** | 4 | 5 | Event log 5 |
| 46.48.213.71 | Event log 6 | --> | 46 | 48 | **198** | **75** | Event log 6 |
| 191.10.187.73 | Event log 7 | --> | **174** | 10 | **182** | **105** | Event log 7 |
| 35.212.79.45 | Event log 8 | --> | 35 | 212 | 79 | **43** | Event log 8 |
| 242.251.4.5 | Event log 9 | --> | 242 | **247** | 4 | 5 | Event log 9 |
| 46.48.213.71 | Event log 10 | --> | 46 | 48 | **198** | 75 | Event log 10 |
| ... | ... | --> | ... | ... | ... | ... | ... |

## FIG. 7

EVENT LOG

500

ANONYMIZER MODULE

501

IP ADRESS EXTRACTION MODULE

502

SEGMENTS EXTRACTION MODULE

503

SENSITIVITY CALCULATION MODULE

504

NOISE GENERATION MODULE

505

NOISE APPLICATION MODULE

506

SEGMENTS MERGING MODULE

MASKED IP ADDRESS

**FIG. 8**

Europäisches
Patentamt

European
Patent Office

Office européen
des brevets

# EUROPEAN SEARCH REPORT

Application Number

**EP 22 38 2159**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MIVULE KATO ET AL: "A study of usability-aware network trace anonymization", 2015 SCIENCE AND INFORMATION CONFERENCE (SAI), IEEE, 28 July 2015 (2015-07-28), pages 1293-1304, XP033217433, DOI: 10.1109/SAI.2015.7237310 [retrieved on 2015-09-02] * III. METHODOLOGY, pages 1297-1299 * ----- | 1-15 | INV. G06F21/62 |
| A | US 11 068 619 B2 (ORANGE [FR]) 20 July 2021 (2021-07-20) * column 2, lines 36-53 * * column 3, line 15 - column 7, line 8 * * column 10, lines 35-49 * * column 13, lines 1-6 * ----- | 1-15 | |

TECHNICAL FIELDS
SEARCHED    (IPC)

G06F
H04L

The present search report has been drawn up for all claims

| Place of search | Date of completion of the search | Examiner |
|---|---|---|
| The Hague | 1 August 2022 | Segura, Gustavo |

EPO FORM 1503 03.82 (P04C01)

**EP 4 235 474 A1**

## ANNEX TO THE EUROPEAN SEARCH REPORT
## ON EUROPEAN PATENT APPLICATION NO.

EP 22 38 2159

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2022

| Patent document cited in search report | | Publication date | Patent family member(s) | | Publication date |
|---|---|---|---|---|---|
| US 11068619 | B2 | 20-07-2021 | EP | 3414701 A1 | 19-12-2018 |
| | | | FR | 3047586 A1 | 11-08-2017 |
| | | | US | 2019050599 A1 | 14-02-2019 |
| | | | WO | 2017137689 A1 | 17-08-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10326772 B2

**Non-patent literature cited in the description**

- **L. SWEENEY.** k-ANONYMITY: A MODEL FOR PROTECTING PRIVACY. *International Journal of Uncertainty, Fuzziness and Knowledge-Based Systems,* October 2002, vol. 10 (05), 557-570
- **G. NAVARRO-ARRIBAS ; V. TORRA ; A. EROLA ; Y J. CASTELLÀ-ROCA.** User k-anonymity for privacy preserving data mining of query logs. *Information Processing & Management,* May 2012, vol. 48 (3), 476-487
- **YAN ZHAO ; JIAN WANG ; YONGCHENG LUO ; JIAJIN LE.** α, β, k)-anonymity: An effective privacy preserving model for databases. *2009 International Conference on Test and Measurement, Hong Kong,* 2009, 412-415
- **A. ALNEMARI ; R. K. RAJ ; C. J. ROMANOWSKI ; S. MISHRA.** Protecting Personally Identifiable Information (PII) in Critical Infrastructure Data Using Differential Privacy. *2019 IEEE International Symposium on Technologies for Homeland Security (HST), Woburn, MA, USA,* November 2019, 1-6